(19) Europäisches Patentamt
European Patent Office
Office européen des brevets

(11) **EP 2 867 695 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(21) Anmeldenummer: **13723495.1**

(22) Anmeldetag: **15.05.2013**

(51) Int Cl.:
*G01S 7/539* (2006.01)       *G01S 15/93* (2020.01)

(86) Internationale Anmeldenummer:
**PCT/EP2013/060077**

(87) Internationale Veröffentlichungsnummer:
**WO 2014/000956 (03.01.2014 Gazette 2014/01)**

(54) **VERFAHREN ZUM BETRIEB EINES UMFELDERFASSUNGSSYSTEMS EINES FAHRZEUGS UND UMFELDERFASSUNGSSYSTEM**

METHOD FOR OPERATING A SURROUNDINGS DETECTION SYSTEM OF A VEHICLE, AND SURROUNDINGS DETECTION SYSTEM

PROCÉDÉ POUR FAIRE FONCTIONNER UN SYSTÈME DE DÉTECTION DES ALENTOURS D'UN VÉHICULE ET SYSTÈME DE DÉTECTION DES ALENTOURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2012 DE 102012211293**

(43) Veröffentlichungstag der Anmeldung:
**06.05.2015 Patentblatt 2015/19**

(73) Patentinhaber: **Robert Bosch GmbH**
**70442 Stuttgart (DE)**

(72) Erfinder: **SCHUHMANN, Michael**
**70597 Stuttgart (DE)**

(56) Entgegenhaltungen:
**DE-A1-102007 060 346     DE-A1-102009 027 842**
**US-A1- 2011 254 728**

EP 2 867 695 B1

**Beschreibung**

Stand der Technik

Die Erfindung betrifft ein Verfahren zum Betrieb eines Umfelderfassungssystems eines Fahrzeugs mit zumindest einer Sende-/Empfangseinheit.

Gegenstand der Erfindung sind auch ein Umfelderfassungssystem und ein Computerprogramm.

Aus der DE10 2010 033 384 A1 ist eine Vorrichtung zur Erfassung einer Fahrzeugumgebung bekannt, welche im Ultraschallfrequenzbereich arbeitet, wobei ein Messsignal mit einer Kodierung ausgesendet und ein resultierendes kodiertes Echosignal mit Nutzsignalanteilen und Störsignalanteilen empfangen und ausgewertet wird. Bei der Auswertung des Echosignals wird zur Erkennung von Bodenechosignalanteilen, deren Amplitude relativ gering ist und deren Übereinstimmung mit dem ausgesendeten Muster relativ gut ist, zur Unterscheidung der verschiedenen Signalteile und zur Erkennung der Nutzsignalanteile das empfangene Echosignal nach einer Korrelation mit dem ausgesendeten Messsignal und zusätzlich nach ermittelten Amplituden der Signalanteile bewertet. Zur Anregung eines Ultraschallbursts wird eine feste Frequenz verwendet. Dadurch lässt sich anhand der Korrelation im Allgemeinen nicht unterscheiden, ob es sich bei rückgestreuten Echos um Echos von Untergründen oder um Echos von Objekten handelt. Nachteilig an dem in der DE10 2010 033 384 A1 offenbarten Verfahren ist außerdem, dass mehrere Kennlinien für die Diskriminierung verwendet werden, was einen hohen Aufwand für die Auswertung bedeutet.

DE 10 2009 027842 A1 offenbart eine Ultraschallmessvorrichtung, die eine Messfolge bezüglich eines Zeitverlaufs der Periodendauern eines empfangenen Ultraschallsignals bestimmt und eine Abweichung der bestimmten Messfolge von mindestens einer Referenzfolge bestimmt. Unter Berücksichtigung der bestimmten Vergleichsinformation wird die Unterdrückung von Bodenechosignalen erreicht.

Offenbarung der Erfindung

Nach einem ersten Aspekt der Erfindung ist bei einem Verfahren zum Betrieb eines Umfelderfassungssystems eines Fahrzeugs mit zumindest einer Sende-/Empfangseinheit vorgesehen, dass die Sende-/Empfangseinheit frequenzmodulierte Signale aussendet und die Sende-/Empfangseinheit und/oder eine oder mehrere weitere Sende-/Empfangseinheiten Echosignale des ausgesendeten frequenzmodulierten Signals empfangen und dass die empfangenen Echosignale gefiltert werden, so dass Bodenechosignalanteile unterdrückt werden.

Anstelle von Sendesignalen mit fester Frequenz, wie im Stand der Technik, werden erfindungsgemäß Sendesignale mit sich veränderbarer Frequenz gewählt, beispielsweise frequenzmodulierte Signale mit linearer, logarithmischer oder quadratischer Modulierung. Bei frequenzmodulierten Signalen ändert sich im Allgemeinen eine Phasengeschwindigkeit im Sendesignal und im Echosignal. Das Bodenecho hat die Eigenschaft, dass sich durch die im Aussendebereich befindlichen Reflexpunkte viele Echos zu einem Signal addieren. Durch eine Überlagerung derartig vieler Echosignale wird die ursprüngliche Signatur des frequenzmodulierten ausgesendeten Signals stark verfälscht, was bei ausreichender Pulsdauer eine Diskriminierung und Unterdrückung ermöglicht.

In vorteilhafter Weise wird andererseits hierdurch eine bessere Detektion von Echosignalen von verkehrstechnisch relevanten Objekten ermöglicht, insbesondere von über dem Boden erhabenen Fahr- oder Parkraumbegrenzungselementen in der Umgebung des Fahrzeugs. Die Erkennung von Fahr- oder Parkraumbegrenzungselementen gestaltet sich je nach äußerer Kontur und Lage unterschiedlich schwierig. So können Objekte mit geringer Reflektivität, beispielsweise Objekte mit rauer oder strukturierter Oberfläche oftmals nicht leicht von einem Hintergrundsignal unterschieden werden, insbesondere wenn der Hintergrund einen Boden umfasst, welcher ebenfalls rau oder strukturiert ist. Bei Verkehrsteilnehmern, wie etwa Personen, kann eine verbesserte Unterscheidbarkeit gegenüber dem Hintergrundsignal entscheidend sein.

Durch Aussendung frequenzmodulierter Signale eine Signalgüte der empfangbaren Signale verbessert, das heißt insbesondere ein Signalrauschverhältnis und eine Robustheit gegen Störeinflüsse wie beispielsweise durch Fremdfahrzeuge, elektromagnetische Störungen von außen und/oder akustisches Rauschen.

Besonders vorteilhaft ist eine Aussendung von frequenzmodulierten Signalen mit Pulsdauern von mehr als 0,7 ms, bevorzugt von 1 ms bis 3 ms, besonders bevorzugt von 1,5 ms bis 2 ms. Durch derartig langpulsige frequenzmodulierte Signale lässt sich ein deutlich verbessertes Signal/Rauschverhältnis erreichen und eine Diskriminierung eines Bodenechosignalanteils, sogenannten Bodenclutters, fällt wesentlich leichter. Bei diesen Pulsdauern konnte eine sehr effiziente Bodenechosignalunterdrückung für alle gemessenen Untergründe, insbesondere für Gras, Asphalt, Schotter, Kies und Pflaster experimentell bestätigt werden. Für Festfrequenzansteuerungen ist eine derart effektive Bodenechosignalunterdrückung nicht erreichbar.

Nach einer bevorzugten Ausführungsform werden aus den empfangenen Echosignalen Phaseninformationen und/oder Amplitudeninformationen bestimmt. Sowohl die Phaseninformation als auch die Amplitudeninformation können ein Maß für eine Relevanz des empfangenen Echosignals darstellen. Bevorzugt erfolgt weiterhin eine Echosignalbewertung der Phaseninformation und/oder der Amplitudeninformation durch eine den Sende-/Empfangseinheiten nachgeschaltete Filterlogik. Die Echosignalbewertung ist maßgeblich bei der Bestimmung der Nutzsignalanteile im Echo. Am Ende einer Filterstrecke können beispielsweise eine Amplitudeninformation in Form einer Kreuzkorrelationsfunktion $x_{corr}(t)$ und eine Phaseninformation in Form eines Kreuzkorrelationskoeffizienten $R(t)$ für eine Auswertung der Signalqualität bereitgestellt werden. Die Amplitudeninformation $x_{corr}(t)$ stellt eine Größe dar, welche von der Amplitude des empfangenen Signals abhängt. Die Phaseninformation $R(t)$ gibt Aufschluss über die Qualität der Phase des empfangenen Signals, idealerweise unabhängig von der Amplitude. Obwohl beispielsweise ein Kreuzkorrelationskoeffizient $R(t)$ niedrig ist, können große Kreuzkorrelationsfunktionswerte $x_{corr}(t)$ ermittelt worden sein. Dies kann beispielsweise bei gleichzeitig sendenden Nachbarsensoren oder bei Fremdfahrzeugen der Fall sein, welche gleichartige Umfelderfassungssysteme betreiben. Umgekehrt können schwache oder weit entfernte Reflektoren zu geringen Kreuzkorrelationsfunktionswerten $x_{corr}(t)$ und hohen Kreuzkorrelationskoeffizienten $R(t)$ führen. Da beide Größen sinnvolle Information über die detektierten Objekte liefern, werden gemäß einer bevorzugten Ausführungsform aus den empfangenen Echosignalen sowohl die Phaseninformation als auch die Amplitudeninformation bestimmt und bei der Bestimmung von Nutzsignalanteilen verwendet.

Abhängig von der Echosignalbewertung wird beispielsweise ein Vorhandensein oder eine Bewegung eines Objekts im Erfassungsbereich der Sende-/Empfangseinheiten gemeldet oder nicht, was beispielsweise zur Aussendung von Warnungen an die Insassen des Fahrzeugs, zur Aktivierung von Unfallvermeidungssystemen und/oder zur Aktivierung von Unfallschadenverringerunssystemen führen kann.

Es kann vorgesehen sein, die Amplitudeninformation $x_{corr}(t)$ und die Phaseninformation $R(t)$ unabhängig voneinander auszuwerten, der Amplitudeninformation $x_{corr}(t)$ und der Phaseninformation $R(t)$ jeweils eine Signalgüte zuzuordnen und eine Entscheidung über eine Qualität des empfangenen Signals aus einer Bewertung der einzelnen Signalgüten zu treffen. Gemäß einer bevorzugten Ausführungsform wird jedoch eine Signalbewertungsfunktion vorgeschlagen, welche aus einer mathematisch verknüpften Kombination der Amplitudeninformation $x_{corr}(t)$ und der Phaseninformation $R(t)$ gebildet ist.

Gemäß einer bevorzugten Ausführungsform wird eine Signalbewertungsfunktion in Form von

$$Q_1(t) = (R(t))^n * (x_{corr}(t))^m$$

vorgeschlagen, wobei die Potenzen $n$, $m$ Parameter sind, welche beispielsweise das Ergebnis experimenteller Versuche sein können. Die Parameter $n$, $m$ können in Abhängigkeit der Anwendungsfälle, je nach Art des detektierten Bodenechos, festgelegt sein und auch zeitabhängig sein. Die Parameter $n$, $m$ können reelle, rationale oder natürliche Zahlen sein. Bevorzugt liegen die Zahlen zwischen 1 und 3, besonders bevorzugt zwischen 1 und 2. Eine besonders bevorzugte Ausführungsform ergibt sich für $n = 2$. Eine weitere bevorzugte Ausführungsform ergibt sich für $m = 1$. Durch diese Kombination der Phaseninformation und der Amplitudeninformation als Signalbewertungsfunktion konnte in experimentellen Ergebnissen eine Verbesserung im Signalrauschverhältnis um einen Faktor 1,5 bis 2 erreicht werden.

Gemäß einer weiteren bevorzugten Ausführungsform wird eine Signalbewertungsfunktion in Form von

$$Q_2(t) = (R(t){-}k(t))^n * (x_{corr}(t))^m$$

vorgeschlagen, wobei $k(t)$ eine zeitabhängige Schwellwertfunktion ist und $n$, $m$ wie im zuvor beschriebenen Ausführungsbeispiel definiert sind. Gemäß einer bevorzugten Ausführungsform ist die zeitabhängige Schwellwertfunktion eine Hüllkurve von Bodenechosignalen. Die Hüllkurve von Bodenechosignalen kann im einfachsten Fall beispielsweise eine Konstante sein, $k(t) = A$. Sie wird bevorzugt als eine relative Bewertung auf Basis eines in der tatsächlichen Situation gemessenen Bodenechos festgelegt.

Aus den empfangenen Echosignalen wird die Amplitudeninformation $x_{corr}(t)$ bevorzugt durch Berechnung einer Faltung eines empfangenen bzw. ein verarbeiteten empfangenen Signals $e(t)$ mit einem erwarteten Signal $s(t)$ ermittelt, beispielsweise nach

$$x_{corr}(t) = \int s(\tau)\, e(t+\tau)\, d\tau.$$

Die Berechnung kann in einem sogenannten angepassten Filter erfolgen. Mit anderen Worten wird die Amplitudeninformation demnach aus einer Korrelationsfunktion ermittelt, welche mittels eines angepassten Filters bestimmt wird. Die Korrelationsfunktion wird über eine Faltung des empfangenen Signals oder des vorverarbeiteten empfangenen Signals mit einem erwarteten Signal berechnet.

Das erwartete Signal s(t) ist eine an eine Übertragungsfunktion des Wandlers angepasste Anregungsfunktion, welche insbesondere eine Signalverzerrung auf Grund von Eigenschaften der Sende-/Empfangseinheit berücksichtigt.

Aus den empfangenen Echosignalen wird die Phaseninformation, d.h. der Kreuzkorrelationskoeffizient R(t) bevorzugt über

$$R(t)^2 = x_{corr}\,(t)^2 \,/\, (\|s(t)\|^2 * \|e(t)\|^2)$$

ermittelt, wobei e(t) das empfangene Signal ist, s(t) das erwartete Signal, $x_{corr}$(t) die Faltung des empfangenen Signals e(t) mit dem erwarteten Signal s(t) und $\|s(t)\|^2$ und $\|e(t)\|^2$ die Quadrate der Normen der Einzelsignale. Vorteilhaft kürzt sich ersichtlich die Amplitudeninformation heraus. Die Phaseninformation, d.h. der Kreuzkorrelationskoeffizient R(t) wird aus $R(t)^2$ durch Wurzelziehung ermittelt.

Es kann vorgesehen sein, das Verfahren bei einem System anzuwenden, welches eine sequentielle Ansteuerung der Sende-/Empfangseinheiten verwendet, d.h. ein System, in welchem die Sende-/Empfangseinheiten nacheinander betrieben werden, oder in einem System, in welchem die Sende-/Empfangseinheiten parallel betrieben werden, was bevorzugt ist. Da durch die Frequenzmodulation insbesondere eine Kodierung der Sende-/Empfangseinheiten bereitgestellt werden kann, erlaubt die Erfindung bei sequentiell angesteuerten Systemen eine erhöhte Updaterate.

Nach einem weiteren Aspekt der Erfindung umfasst ein Umfelderfassungssystem eines Fahrzeuges eine Sende-/Empfangseinheit, welche eingerichtet ist, frequenzmodulierte Signale auszusenden und zu empfangen, eine Filtervorrichtung, welche an die Sende-/Empfangseinheit gekoppelt ist, so dass empfangene Signale die Filtervorrichtung durchlaufen können. Die Filtervorrichtung ist dabei eingerichtet, um Bodenechosignalanteile zu unterdrücken.

Das Umfelderfassungssystem ermöglicht eine schnelle und treffsichere Aussage über Objekte im und nahe des Fahrschlauchs. Mit treffsicher kann sowohl eine Lokalisiergenauigkeit in einem Erfassungsbereich der Sende-/Empfangseinheiten, in einem sogenannten *field of view* (FOV), bezeichnet sein als auch die Detektionswahrscheinlichkeit, das heißt eine Zahl an Detektionen eines Hindernisses in einem bestimmten Zeitintervall.

Das Umfelderfassungssystem weist zumindest eine Sende-/Empfangseinheit auf, wobei die Sende-/Empfangseinheit im Rahmen der Erfindung auch eine Sendeeinheit sein kann, eine Empfangseinheit oder, wie üblicherweise, eine Sende- und Empfangseinheit.

Nach einer bevorzugten Ausführungsform ist die Filtervorrichtung eingerichtet, um eine Phaseninformation R(t) und eine Amplitudeninformation $x_{corr}$(t) zu bestimmen. Das Umfelderfassungssystem umfasst dabei eine Signalbewertungseinheit, welche eingerichtet ist, die Amplitudeninformation $x_{corr}$(t) und die Phaseninformation R(t) mathematisch zu verknüpfen, insbesondere, wie mit Bezug zum erfindungsgemäßen Verfahren beschrieben.

Das Umfelderfassungssystem ist bevorzugt als ein Ultraschallsystem ausgebildet. Ein erfindungsgemäßes Ultraschallsystem kann eine Gruppe von Ultraschallsensoren umfassen, welche gemeinsam eine Teilumgebung des Fahrzeuges erfassen, beispielsweise können die Ultraschallsensoren im Frontbereich zur Erfassung einer vorderseitigen Fahrzeugumgebung und/oder die Ultraschallsensoren im Seitenbereich zur Erfassung eines Seitenbereichs des Fahrzeugs und/oder die Ultraschallsensoren im Heckbereich zur Erfassung einer rückwärtigen Umgebung des Fahrzeugs jeweils einem Ultraschallsystem zugeordnet sein. Dabei können vier bis sechs Sensoren in einem Stoßfänger verbaut werden, wobei nur maximal vier Sensoren mit ungefähr derselben Blickrichtung montiert sind. Insbesondere, um auch den Bereich neben dem Kraftfahrzeug zu erfassen, werden im vorderen Stoßfänger Sensoren positioniert, die nach links und nach rechts ihren Erfassungsbereich haben. Zusätzlich oder alternativ können auch im hinteren Stoßfänger Sensoren derart positioniert sein, dass diese einen Bereich links und rechts neben dem Kraftfahrzeug erfassen. Das Ultraschallsystem kann darüber hinaus auch eine der jeweiligen Gruppe zugeordnete Steuereinrichtung und eine Signalverarbeitungseinrichtung umfassen.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, die auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z. B. über ein Datennetzwerk wie etwa das Internet oder eine Kommunikationsverbindung wie etwa eine Telefonleitung oder eine drahtlose Verbindung.

Kurze Beschreibung der Zeichnungen

Ausführungsbeispiele der Erfindung sind in der Zeichnung dargestellt und in der nachfolgenden Beschreibung näher erläutert.

Es zeigen

Figur 1    eine Vorrichtung zur Umfelderfassung eines Fahrzeugs mit mehreren Sende-/Empfangseinheiten;

Figur 2    eine erste Ausführungsform einer Filtervorrichtung zum Erzeugen einer Signalbewertungsfunktion und

Figur 3    eine zweite Ausführungsform einer Filtervorrichtung zum Erzeugen einer Signalbewertungsfunktion.

Ausführungsformen der Erfindung

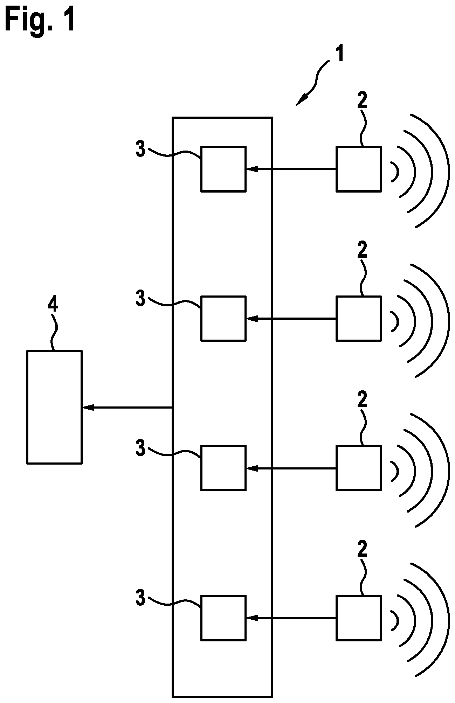

Figur 1 zeigt eine Vorrichtung 1 zur Umfelderfassung eines Fahrzeugs mit hier beispielhaft dargestellten vier Sende-/Empfangseinheiten 2, beispielsweise Ultraschallsensoren, welche eingerichtet sind, frequenzmodulierte Signale auszusenden und zu empfangen. Die Sende-/Empfangseinheiten 2 können parallel oder seriell betrieben sein.
Die Sende-/Empfangseinheiten 2 sind an Filtervorrichtungen 3 gekoppelt. Da die von den Sende-/Empfangseinheiten 2 empfangenen Echosignale Nutzsignalanteile und Störsignalanteile aufweisen, durchlaufen die empfangenen Echosignale die Filtervorrichtung 3, um die Nutzsignalanteile aus den Echosignalen zu ermitteln. Die Filtervorrichtungen 3 leiten die Nutzsignalanteile oder gemäß bevorzugten Ausführungsformen der Erfindung Signalbewertungsfunktionen $Q_1(t)$ und/oder $Q_2(t)$ einem Steuergerät 4 zu. Das Steuergerät 4 kann etwa als ein Teil eines Fahrassistenzsystems ausgebildet sein, beispielsweise eines Parkassistenten, *back over avoidance-Systems, adaptive cruise control-Systems* (ACC-Systems), und/oder Totwinkeldetektiersystems (*blind spot detection-Systems,* BSD-Systems), oder Signale und/oder Daten für derartige Fahrassistenzsysteme bereitstellen.

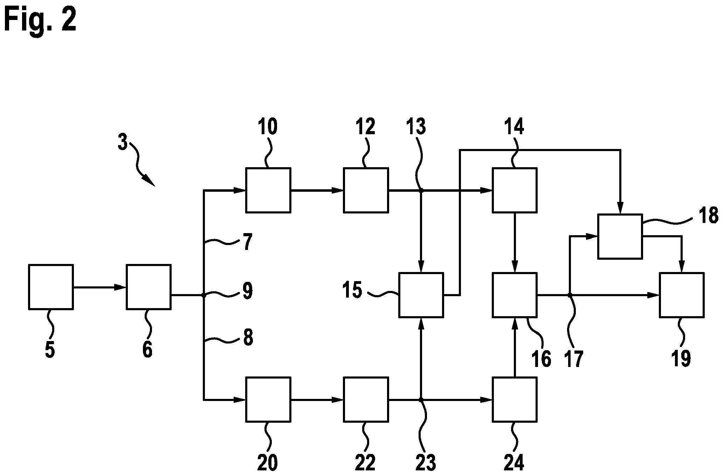

Figur 2 zeigt eine erste Ausführungsform einer Filtervorrichtung 3, welche beispielsweise im Rahmen der Vorrichtung 1 zur Umfelderfassung eines Fahrzeugs verwendet werden kann, die mit Bezug auf Figur 1 beschrieben wurde.
Die Filtervorrichtung 3 umfasst einen Vorverstärker 5, welcher das empfangene Echosignal einer Sende-/Empfangseinheit 2 verstärkt und einen AD-Wandler 6, welcher eingerichtet ist, das empfangene analoge Signal in ein digitales Signal zu verarbeiten. Der AD-Wandler 6 kann beispielsweise mit einer Samplefrequenz von 200 kHz ausgestattet sein. Der AD-Wandler 6 empfängt das analoge Signal vom Vorverstärker 5. In der dargestellten Ausführungsform wird das empfangene Eingangssignal an einem ersten Signalverzweigungspunkt 9 in einen ersten Signalzweig 7 und einen zweiten Signalzweig 8 aufgeteilt. Im ersten Signalzweig 7 wird eine In-Phase-Komponente des Signals verarbeitet und im zweiten Signalzweig 8 wird eine Quadraturkomponente des Signals verarbeitet. Die verarbeiteten In-Phase-Komponenten und Quadraturkomponenten werden an Mischeinheiten 15, 16 wieder zusammengeführt und weiterverarbeitet.
Die Filtervorrichtung 3 weist im ersten Signalzweig 7 der In-Phase-Komponente eine Modulationsvorrichtung 10 auf, über welche ein Sinussignal aufmoduliert wird. Die Filtervorrichtung 3 weist im ersten Signalzweig 7 der In-Phase-Komponente weiterhin eine Resamplervorrichtung 12 auf, welche das Signal der Modulationsvorrichtung 10 weiterverarbeitet. In der Resamplervorrichtung 12 wird die Anzahl der Datenpunkte reduziert, beispielsweise auf 1:8. Die Samplefrequenz und der Teiler hängen von der Nutzsignalfrequenz und deren Bandbreite ab. Die Abtastfrequenz des Wandlers ist in einigen Ausführungsformen mindestens das Vierfache der Nutzfrequenz und wird je nach Bandbreite des Signals durch die Resamplervorrichtung 12 auf eine kleinere Abtastfrequenz reduziert.
Das Signal der In-Phase-Komponente wird an einem zweiten Signalverzweigungspunkt 13 weiter verzweigt. In einem ersten Zweig wird das Signal einem angepassten Filter 14 zugeführt und in einem zweiten Zweig wird das Signal einer ersten Mischeinheit 15 zugeführt, welche das verarbeitete Eingangssignal $e_I(t)$ der In-Phase-Komponente ohne angepasste Filterung empfängt. Im angepassten Filter 14 ist das erwartete Empfangssignal s(t) der Sende-/Empfangseinheit abgebildet, welche eine Signalverzerrung auf Grund von Eigenschaften der Sende-/Empfangseinheit ausgleicht. Im angepassten Filter wird eine Faltung des verarbeiteten Eingangssignals $e_I(t)$ mit einem erwarteten Signal s(t) berechnet, beispielsweise

$$x_{corr\ I}(t) = \int s(\tau)\, e_I(t + \tau)\, d\tau,$$

wobei $x_{corr\ I}(t)$ die Amplitudeninformation der In-Phase-Komponente beinhaltet. Nach Passage des angepassten Filters 14 wird das Signal der Amplitudeninformation $x_{corr\ I}(t)$ aus dem ersten Signalzweig 7 der In-Phase-Komponente einer zweiten Mischeinheit 16 zugeführt.

In dem zweiten Signalzweig 8 der Quadraturkomponente wird das Signal einer zweiten Modulationsvorrichtung 20 zugeführt, welche eine Kosinusfunktion aufmoduliert. Das hiervon abgehende Signal wird wiederum einer Resamplervorrichtung 22 zugeführt, in welcher die Anzahl der Datenpunkte reduziert wird. Das hiervon abgängige Signal wird an einem weiteren Signalverzweigungspunkt 23 gesplittet und der ersten Mischeinheit 15 sowie einem zweiten angepassten Filter 24 zugeführt. Im zweiten angepassten Filter 24 wird eine Faltung des verarbeiteten Eingangssignals $e_Q(t)$ wiederum mit dem erwarteten Signal s(t) berechnet, beispielsweise

$$x_{corr\,Q}\,(t) = \int s(\tau)\,e_Q(t + \tau)\,d\tau.$$

Die Amplitudeninformation der Quadraturkomponente $x_{corr\,Q}(t)$, welche den zweiten angepassten Filter 24 verlässt, wird wiederum der zweiten Mischeinheit 16 zugeführt.

In der ersten Mischeinheit 15 wird eine Hüllkurve aus dem verarbeiteten Eingangssignal $e_I(t)$ der In-Phase-Komponente und dem verarbeiteten Eingangssignal $e_Q(t)$ der Quadraturkomponente gebildet, beispielsweise durch Quadratur der Signale, Addition und anschließender Wurzelziehung, das heißt

$$E(t) = \sqrt{e_I^2 + e_Q^2}.$$

Das verarbeitete Eingangssignal $e_I(t)$ der In-Phase-Komponente und das verarbeitete Eingangssignal $e_Q(t)$ der Quadraturkomponente kann auch kurz als Eingangssignal E(t) bezeichnet werden.

In der zweiten Mischeinheit 16 werden die In-Phase-Komponente und Quadraturkomponente der Signale, $x_{corr\,I}(t)$ und $x_{corr\,Q}(t)$, welche die angepassten Filter 14, 24 durchlaufen haben, zusammengeführt und eine Hüllkurve gebildet, beispielsweise durch Quadratur der einzelnen Signalkomponenten, Addition und anschließende Wurzelziehung, das heißt

$$x_{corr}\,(t) = \sqrt{x_{corr\,I}^2 + x_{corr\,Q}^2}.$$

Das Signal, welches von der zweiten Mischeinheit 16 abgeht, stellt die Amplitudeninformation $x_{corr}(t)$ dar. Die Amplitudeninformation $x_{corr}(t)$ wird in einem weiteren Verzweigungspunkt 17 gesplittet und einer Phaseninformationsberechnungseinheit 18 und einer Signalbewertungseinheit 19 zugeführt.

Die Filtervorrichtung 3 weist eine Phaseninformationsberechnungseinheit 18 auf, welche das Eingangssignal E(t) von der ersten Mischeinheit 15 empfängt und welche das Amplitudeninformationssignal $x_{corr}(t)$ von der zweiten Mischeinheit 16 empfängt. Die Phaseninformationsbereitstellungseinheit 18 berechnet hieraus das Quadrat des Korrelationskoeffizients R(t) nach

$$R(t)^2 = x_{corr}\,(t)^2 / (\|s(t)\|^2 * \|E(t)\|^2),$$

das heißt durch Quadratur der Eingangssignals und des erwarteten Signals, deren Inversenbildung und Multiplikation mit dem Quadrat der Amplitudeninformation. Die Phaseninformation R(t) kann hieraus durch Wurzelziehung ermittelt werden.

Die Filtervorrichtung 3 weist weiterhin eine Signalbewertungseinheit 19 auf, welche die Amplitudeninformation $x_{corr}(t)$ von der zweiten Mischeinheit 16 empfängt und welche die Phaseninformation R(t) von der Phaseninformationsberechnungseinheit 18 empfängt. Die Signalbewertungseinheit 19 kann gemäß einigen bevorzugten Ausführungsform der Erfindung eine Darstellung in Form von

$$Q_1(t) = (R(t))^n * (x_{corr}\,(t))^m$$

berechnen. Besonders bevorzugt ist eine Berechnung mit den Werten n = 2 und m = 1, wodurch das Ergebnis von $x_{corr}(t)$ nochmals mit dem Phasenterm gewichtet wird. Im Fall n = 2 kann vorteilhaft das Quadrat des Korrelationskoeffizients $R(t)^2$ bereits an der Phaseninformationsberechnungseinheit 18 abgegriffen werden. Gemäß weiteren Ausführungsformen berücksichtigt die Signalbewertungseinheit 19 eine zeitabhängige Schwellwertfunktion k(t) mit dem Verlauf einer Hüllkurve von Bodenechosignalen (auch als Bodenclutterhüllkurve bezeichnet). Gemäß bevorzugten Ausführungsform kann die Signalbewertungseinheit 19 eine Darstellung in Form von

$$Q_2(t) = (R(t)-k(t))^n * (x_{corr}(t))^m$$

berechnen. Besonders bevorzugt ist eine Berechnung mit den Werten n = 2 und m = 1.

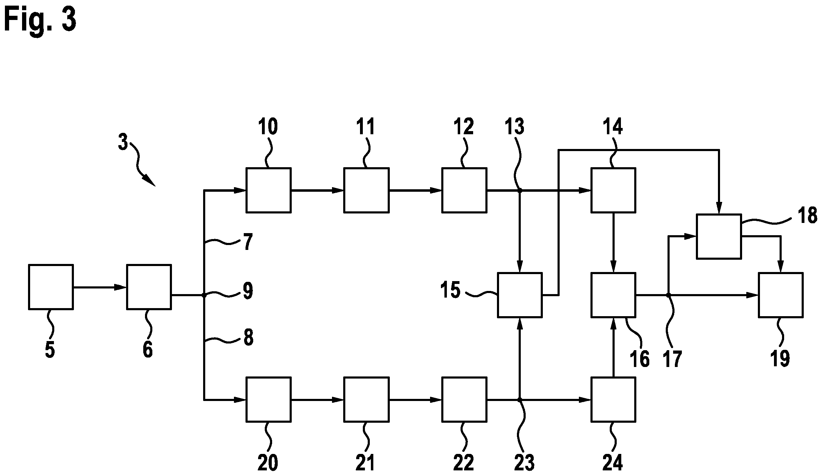

Figur 3 zeigt die Vorrichtung gemäß Figur 2 mit dem Unterschied, dass in dem ersten Signalzweig 7 der In-Phase-Komponente und im zweiten Signalzweig 8 der Quadraturkomponente des Eingangsignals zwischen dem Multiplikator 10 und der Resamplervorrichtung 12 ein Tiefpass 11, 21 geschaltet ist. Der Tiefpass 11, 21 filtert das durch das Mischen entstandene höherfrequente Nutzsignalband. Die weiteren Rechnungen finden dann nur im niederfrequenten Nutzsignalband statt.

**Patentansprüche**

1. Verfahren zum Betrieb eines Umfelderfassungssystems (1) eines Fahrzeugs mit zumindest einer Sende-/Empfangseinheit (2), wobei die Sende-/Empfangseinheit (2) frequenzmodulierte Signale aussendet und die Sende-/Empfangseinheit (2) und/oder eine oder mehrere weitere Sende-/Empfangseinheiten (2) Echosignale der ausgesendeten Signale empfangen, **dadurch gekennzeichnet, dass** aus den empfangenen Echosignalen eine Phaseninformation $R(t)$ und eine Amplitudeninformation $x_{corr}(t)$ bestimmt werden und eine Signalbewertungsfunktion $Q_1(t)$ oder $Q_2(t)$ ermittelt wird, wobei

$$Q_1(t) = (R(t))^n * (x_{corr}(t))^m$$

und

$$Q_2(t) = (R(t)-k(t))^n * (x_{corr}(t))^m,$$

wobei $k(t)$ eine Schwellenwertfunktion ist und n und m reelle Zahlen sind, wodurch die empfangenen Echosignale gefiltert werden, so dass Bodenechosignalanteile unterdrückt werden.

2. Verfahren nach Anspruch 1, **dadurch gekennzeichnet, dass** die ausgesendeten frequenzmodulierten Signal Pulsdauern von mehr als 0,7 ms, bevorzugt von 1 ms bis 3 ms, besonders bevorzugt von 1,5 ms bis 2 ms aufweisen.

3. Verfahren nach Anspruch 1 oder 2, **dadurch gekennzeichnet, dass** die Schwellenwertfunktion $k(t)$ eine Hüllkurve von Bodenechosignalen ist.

4. Verfahren nach einem der Ansprüche 1 bis 3, **dadurch gekennzeichnet, dass** n und m natürliche Zahlen, bevorzugt dass n = 2 und m = 1 sind.

5. Verfahren nach einem der vorhergehenden Ansprüche, **dadurch gekennzeichnet, dass** aus den empfangenen Echosignalen eine Amplitudeninformation $x_{corr}(t)$ durch Berechnung einer Faltung eines empfangenen Signals $e(t)$ mit einem erwarteten Signal $s(t)$ ermittelt wird.

6. Verfahren nach einem der vorhergehenden Ansprüche, **dadurch gekennzeichnet, dass** aus den empfangenen Echosignalen eine Phaseninformation $R(t)$ gemäß

$$R(t)^2 = x_{corr}(t)^2 / (\|s(t)\|^2 * \|e(t)\|^2)$$

ermittelt wird, wobei $e(t)$ ein empfangenes Signal ist, $s(t)$ ein erwartetes Signal ist und $x_{corr}(t)$ eine Faltung des empfangenen Signals $e(t)$ mit dem erwarteten Signal $s(t)$ ist.

7. Umfelderfassungssystem (1) eines Fahrzeuges mit zumindest einer Sende-/Empfangseinheit (2), welche eingerichtet ist, frequenzmodulierte Signale auszusenden und zu empfangen, mit einer Filtervorrichtung (3), welche an die zumindest eine Sende-/Empfangseinheit (2) gekoppelt ist, so dass empfangene Echosignale die Filtervorrichtung (3) durchlaufen können, **dadurch gekennzeichnet, dass** die Filtervorrichtung (3) eingerichtet ist, eine Phaseninformation R(t) und eine Amplitudeninformation $x_{corr}$(t) zu bestimmen, und das Umfelderfassungssystem (1) eine Signalbewertungseinheit (19) umfasst, welche eingerichtet ist, die Amplitudeninformation $x_{corr}$(t) und die Phaseninformation R(t) mathematisch in der Form

$$Q_1(t) = (R(t))^n * (x_{corr}(t))^m$$

oder

$$Q_2(t) = (R(t) - k(t))^n * (x_{corr}(t))^m$$

zu verknüpfen, wobei k(t) eine Schwellenwertfunktion ist und n und m reelle Zahlen sind, wodurch die empfangenen Echosignale gefiltert werden, so dass Bodenechosignalanteile unterdrückt werden.

## Claims

1. Method for operating a surroundings detection system (1) of a vehicle having at least one transceiver unit (2), wherein the transceiver unit (2) emits frequency-modulated signals, and the transceiver unit (2) and/or one or more further transceiver units (2) receive echo signals of the emitted signals, **characterized in that** phase information R(t) and amplitude information $x_{corr}$(t) is determined from the received echo signals, and a signal evaluation function $Q_1$(t) or $Q_2$(t) is acquired, wherein

$$Q_1(t) = (R(t))^n * (x_{corr}(t))^m$$

and

$$Q_2(t) = (R(t) - k(t))^n * (x_{corr}(t))^m,$$

wherein k(t) is a threshold value function and n and m are real numbers, as a result of which the received echo signals are filtered, with the result that ground echo signal components are suppressed.

2. Method according to Claim 1, **characterized in that** the emitted frequency-modulated signals have pulse lengths at more than 0.7 ms, preferably from 1 ms to 3 ms, particularly preferably from 1.5 ms to 2 ms.

3. Method according to Claim 1 or 2, **characterized in that** the threshold value function k(t) is an envelope curve of ground echo signals.

4. Method according to one of Claims 1 to 3, **characterized in that** n and m are natural numbers, and preferably n = 2 and m = 1.

5. Method according to one of the preceding claims, **characterized in that** amplitude information $x_{corr}$(t) is acquired from the received echo signals by calculating a convolution of a received signal e(t) with an expected signal s(t).

6. Method according to one of the preceding claims, **characterized in that** phase information R(t) is acquired from the received echo signals according to

$$R(t)^2 = x_{corr}(t)^2 / (\|s(t)\|^2 * \|e(t)\|^2)$$

where e(t) is a received signal, s(t) is an expected signal and $x_{corr}$(t) is a convolution of the received signal e(t) with the expected signal s(t).

7. Surroundings detection system (1) of a vehicle having at least one transceiver unit (2) which is configured to emit and to receive frequency-modulated signals, with a filter device (3) which is coupled to the at least one transceiver unit (2), with the result that the received echo signals can pass through the filter device (3), **characterized in that** the filter device (3) is configured to determine phase information R(t) and amplitude information $x_{corr}(t)$, and the surroundings detection system (1) comprises a signal evaluation unit (19) which is configured to link the amplitude information $x_{corr}(t)$ and the phase information R(t) mathematically in the form of

$$Q_1(t) = (R(t))^n * (x_{corr}(t))^m$$

or

$$Q_2(t) = (R(t)-k(t))^n * (x_{corr}(t))^m,$$

wherein k(t) is a threshold value function and n and m are real numbers, as a result of which the received echo signals are filtered, with the result that ground echo signal components are suppressed.

## Revendications

1. Procédé pour faire fonctionner un système de balayage de l'environnement (1) d'un véhicule, comprenant au moins une unité d'émission/réception (2), l'unité d'émission/réception (2) émettant des signaux modulés en fréquence et l'unité d'émission/réception (2) et/ou une ou plusieurs unités d'émission/réception (2) supplémentaires recevant des signaux d'écho des signaux émis,
   **caractérisé en ce qu'**une information de phase R(t) et une information d'amplitude $x_{corr}(t)$ sont déterminées à partir des signaux d'écho reçus et une fonction d'évaluation de signal $Q_1(t)$ ou $Q_2(t)$ est identifiée, avec

$$Q_1(t) = (R(t))^n * (x_{corr}(t))^m$$

et

$$Q_2(t) = (R(t)-k(t))^n * (x_{corr}(t))^m,$$

   k(t) étant une fonction de valeur de seuil et n et m étant des nombres réels, moyennant quoi les signaux d'écho reçus sont filtrés de sorte que les composantes de signal d'écho du sol sont supprimées.

2. Procédé selon la revendication 1, **caractérisé en ce que** les signaux modulés en fréquence émis présentent des durées d'impulsion supérieures à 0,7 ms, de préférence de 1 ms à 3 ms, notamment de préférence de 1,5 ms à 2 ms.

3. Procédé selon la revendication 1 ou 2, **caractérisé en ce que** la fonction de valeur de seuil k(t) est une courbe d'enveloppe de signaux d'écho du sol.

4. Procédé selon l'une des revendications 1 à 3, **caractérisé en ce que** n et m sont des nombres naturels, de préférence **en ce que** n = 2 et m = 1.

5. Procédé selon l'une des revendications précédentes, **caractérisé en ce qu'**une information d'amplitude $x_{corr}(t)$ est identifiée à partir des signaux d'écho reçus en calculant une convolution d'un signal reçu e(t) avec un signal attendu s(t).

6. Procédé selon l'une des revendications précédentes, **caractérisé en ce qu'**une information de phase R(t) est identifiée à partir des signaux d'écho reçus selon

$$R(t)^2 = x_{corr}(t)^2 / (||s(t)||^2 * ||e(t)||^2),$$

e(t) étant un signal reçu, s(t) étant un signal attendu et $x_{corr}(t)$ étant une convolution du signal reçu e(t) avec le signal attendu s(t).

7. Système de balayage de l'environnement (1) d'un véhicule, comprenant au moins une unité d'émission/réception (2), laquelle est conçue pour émettre et recevoir des signaux modulés en fréquence, comprenant un dispositif de filtrage (3) qui et connecté à l'au moins une unité d'émission/réception (2), de sorte que les signaux d'écho reçus peuvent passer à travers le dispositif de filtrage (3), **caractérisé en ce que** le dispositif de filtrage (3) est conçu pour déterminer une information de phase R(t) et une information d'amplitude $x_{corr}(t)$ et **en ce que** le système de balayage de l'environnement (1) comporte une unité d'évaluation de signal (19) qui est conçue pour lier mathématiquement l'information d'amplitude $x_{corr}(t)$ et l'information de phase R(t) sous la forme

$$Q_1(t) = (R(t))^n * (x_{corr}(t))^m$$

ou

$$Q_2(t) = (R(t)-k(t))^n * (x_{corr}(t))^m,$$

k(t) étant une fonction de valeur de seuil et n et m étant des nombres réels, moyennant quoi les signaux d'écho reçus sont filtrés de sorte que les composantes de signal d'écho du sol sont supprimées.

# Fig. 1

# Fig. 2

Fig. 3

EP 2 867 695 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010033384 A1
- DE 102009027842 A1